Europäisches Patentamt

European Patent Office

Office européen des brevets

(11) Veröffentlichungsnummer: **0 012 906**
A1

## (12) EUROPÄISCHE PATENTANMELDUNG

(21) Anmeldenummer: 79105040.4

(22) Anmeldetag: 10.12.79

(51) Int. Cl.³: **B 32 B 27/18**
C 08 J 9/42, B 32 B 27/12

(30) Priorität: 23.12.78 DE 2856081

(43) Veröffentlichungstag der Anmeldung:
09.07.80 Patentblatt 80/14

(84) Benannte Vertragsstaaten:
AT BE CH DE FR GB IT NL SE

(71) Anmelder: BAYER AG
Zentralbereich Patente, Marken und Lizenzen
D-5090 Leverkusen 1, Bayerwerk(DE)

(71) Anmelder: METZELER SCHAUM GMBH
Donaustrasse 51
D-8940 Memmingen(DE)

(72) Erfinder: Kost, Willi
Duennwalder Mauspfad 376
D-5000 Koeln 80(DE)

(72) Erfinder: Sandstrom, Kjell
Regnar Lodbrogsvej 3
DK-3600 Frederikssund(DK)

(54) Schwer entflammbare Laminate, Verfahren zu ihrer Herstellung und ihre Verwendung.

(57) Schwer entflammbare Laminate aus einem bahnartigen Flächengebilde aus organischem oder anorganischem Material und einem damit verbundenen, durch Behandlung mit einer Mischung aus einem Elastomerlatex und einem flammhemmenden Additiv und anschließender Vernetzung des Latex flammwidrig ausgerüsteten Polyurethanschaum.

EP 0 012 906 A1

0012906

BAYER AKTIENGESELLSCHAFT

Zentralbereich
Patente, Marken und Lizenzen
5090 Leverkusen, Bayerwerk
Kb/bc/Kü

METZELER SCHAUM GMBH

Zentrale Patentabteilung

8940 Memmingen

## Schwer entflammbare Laminate, Verfahren zu ihrer Herstellung und ihre Verwendung

Die Erfindung betrifft schwer entflammbare Laminate aus einem bahnartigen, insbesondere einem textilen Flächengebilde und einem damit verbundenen Polyurethanschaum, der durch Behandlung mit einer Mischung aus einem Elastomerlatex und einem flammhemmenden Additiv und anschließender Vernetzung des Latex flammwidrig ausgerüstet ist, ein Verfahren zur Herstellung dieser Laminate und deren Verwendung zur Umhüllung brennbarer Polstermaterialien.

Aus der britischen Patentschrift 977 929 ist es bereits bekannt, die Entflammbarkeit von Schaumstoffen durch Behandeln mit vulkanisierbaren Elastomerlatices herabzusetzen, wobei die Vulkanisation in üblicher Weise mit Schwefel unter Zusatz der bekannten schwefelhaltigen Vulkanisationsbeschleuniger erfolgt.

Le A 19 339 - Europa
MS 109 E 78

Nach dem Verfahren der DE-OS 2 649 222 werden anorganische, flammhemmende Zusätze wie Magnesiumcarbonat oder Aluminiumoxidhydrat mit Hilfe von Elastomerlatices in einen Schaumstoff eingebracht, um ihn schwerer entflammbar zu machen, und die Latices anschließend mit Schwefel vernetzt.

In der DE-AS 2 618 216 und der DE-OS 2 659 886 wird vorgeschlagen, die Brennbarkeit von Polsterungen dadurch herabzusetzen, daß man sie mit einer Umhüllung aus einem Polychloroprenschaum versieht, der eine hydratisierte anorganische Verbindung und gegebenenfalls ein verkohlungsförderndes Mittel enthält.

Es wurde nun gefunden, daß Laminate aus einem flammwidrig ausgerüsteten Polyurethanschaum und einem damit verbundenen bahnartigen, vorzugsweise einem textilen Flächengebilde schwer entflammbar bzw. selbstverlöschend sind und sich hervorragend als Brandschutzmaterialien eignen, z.B. zur Umhüllung von brennbaren Polsterungen.

Gegenstand der Erfindung sind schwer entflammbare Laminate aus

a) einem in sich geschlossenen oder perforierten bahnartigen Flächengebilde aus einem organischen oder anorganischen Material, und

b) einem damit verbundenen flammwidrig ausgerüsteten Polyurethanschaum.

Le A 19 339
MS 109 E 78

Ein weiterer Gegenstand der Erfindung ist ein Verfahren zur Herstellung der erfindungsgemäßen Laminate, das dadurch gekennzeichnet ist, daß das bahnartige Flächengebilde durch Verkleben, Flammkaschieren oder direktes Beschäumen mit dem Polyurethanschaum verbunden und dieser dann mit einer Mischung aus einem vernetzbaren Elastomerlatex und einem flammhemmenden Additiv behandelt und der Latex anschließend vernetzt wird.

Gegenstand der Erfindung ist außerdem die Verwendung der erfindungsgemäßen Laminate zur Herstellung schwer entflammbarer Polstermaterialien durch teilweise oder vollständige Bedeckung oder Umhüllung von brennbaren Polstermaterialien mit den schwer entflammbaren Laminaten.

Die erfindungsgemäßen Laminate können einschichtig aufgebaut sein, beispielsweise, indem auf das bahnartige Flächengebilde lediglich eine Schicht aus Polyurethanschaum aufgebracht wird. Es ist aber auch ein mehrschichtiger Aufbau möglich, bei dem beispielsweise das bahnartige Flächengebilde auf beiden Seiten mit einer Schicht aus Polyurethanschaum verbunden ist. Die Dicke der Laminate kann 2 bis 50 mm betragen, bevorzugt sind 5 bis 30 mm.

Das bahnartige Flächengebilde kann aus einem synthetischen oder natürlichen organischen oder anorganischen Material bestehen und in geschäumter Form, in Form einer Folie oder in Form eines Fasermaterials wie z.B. Papier vorliegen. Vorzugsweise handelt es sich jedoch um ein textiles Flächengebilde in Form eines Gewebes, Gewirkes oder Vliesstoffes aus natürlichen und/oder synthetischen Fasern. Besonders bevorzugt ist ein gegebenenfalls mit

- 4 -

Flammschutzmitteln vorbehandeltes Gewebe aus Baumwolle.

Geeignet für den Aufbau der erfindungsgemäßen Laminate sind alle sogenannten Weichschäume aus Polyurethan, d.h. flexible,im wesentlichen offenzellige oder auch retikulierte Polyurethanschäume. Bevorzugt sind Polyester- und Polyether-urethanschaum mit einem Raumgwicht von 10 bis 50 kg/m$^3$.

Die Verbindung von Flächengebilde und Polyurethanschaum kann in an sich bekannter Weise erfolgen, z.B. durch Verkleben,vorzugsweise durch Flammkaschieren oder auch durch direkts Beschäumen. Das Flächengebilde kann eine in sich geschlossene Oberfläche besitzen oder auch perforiert, beispielsweise geschlitzt oder gelocht sein. Es ist auch möglich, Kombinationen der vorstehend beschriebenen Flächengebilde zu benutzen.

Zur Imprägnierung des Polyurethanschaums sind im Prinzip alle vernetzbaren Elastomeren geeignet, die in Form ihrer Latices mit einem Feststoffgehalt von 30 bis 70, vorzugsweise von 40 bis 60 Gew.-% eingesetzt werden. Daneben können die Latices geringe Mengen üblicher Zusätze, wie z.B. Methylcellulose, enthalten. Geeignete Elastomere sind beispielweise Naturkautschuk, Homo- und Copolymerisate von gegebenenfalls halogensubstituierten Dienen mit 4 bis 8 Kohlenstoffatomen,wie Polybutadien, Polyisopren und Polychloropren, Copolymerisate von Butadien mit Styrol oder Acrylnitril und Poly(meth)acrylsäureester. Vorzugsweise werden carboxylgruppenhaltige Elastomere verwendet, die mit Zinkoxid oder Magnesiumoxid vernetzt werden können. Besonders bevorzugt sind Copolymere von Chloropren mit Acrylsäure und/oder Methacrylsäure, die 1 bis 7, vorzugsweise 3 bis 5 Gew.-% an einpolymerisierten Carbonsäureeinheiten enthalten.

Zur Imprägnierung des Polyurethanschaums wird eine Mischung aus den vorerwähnten Latices und einer flammhemmenden Verbindung eingesetzt. Geeignete Verbindungen sind beispielsweise Magnesiumcarbonat, Magnesiumoxidhydrat und vorzugsweise Aluminiumhydroxid.

Zur Herstellung einer für die Imprägnierung besonders geeigneten Mischung wird in einen carboxylgruppenhaltigen Polychloroprenlatex etwa die 1- bis 5-fache, bevorzugt die 1- bis 2-fache Gewichtsmenge, bezogen auf den Feststoffgehalt des Latex, an Aluminiumhydroxid eingearbeitet. Um die Einarbeitung des Aluminiumhydroxids zu erleichtern und die Stabilität des Latex zu erhalten, werden dabei im allgemeinen 5 bis 10 Gew.-% geeigneter oberflächenaktiver Substanzen, wie z.B. ethoxylierte Alkylphenole und/oder sulfierte Netzmittel wie Alkylsulfonate mitverwendet. Um eine zu starke Schaumbildung zu vermeiden, können außerdem Silikonölemulsionen zugesetzt werden.

Zusätzlich zu Aluminiumhydroxid können dem Latex auch noch andere flammhemmende Verbindungen, z.B. Halogenkohlenwasserstoffe, wie Pentabromtoluol und/oder Antimontrioxid, in Mengen von 5 bis 30 Gew.-% zugesetzt werden.

Als weiteren Bestandteil enthält eine derartige Imprägnierungsmischung Magnesiumoxid oder Zinkoxid, die z.T. als Vernetzer für das Elastomere dienen. Der Vernetzer ist in der Mischung in einer Menge von 1 bis 3 Mol, vorzugsweise von 1,5 bis 2,5 Mol enthalten, bezogen auf 1 Mol Carboxylgruppen des Elastomeren. Insgesamt enthält die Mischung 5 bis 15, bevorzugt 7,5 bis 10 Gew.-Teile Zinkoxid oder Magnesiumoxid, bezogen auf 100 Gew.-Teile Kautschuktrockensubstanz.

Außer den bisher genannten Bestandteilen der Mischung kann diese noch weitere Zusätze wie z.B. Pigmente oder Alterungsschutzmittel enthalten.

Die Mischung zur Behandlung des Polyurethanschaums, die beispielsweise aus einem Polychloroprenlatex durch Zugabe der o.g. Bestandteile erhalten wird, liegt in Form einer Dispersion oder Suspension vor mit einem Feststoffgehalt von 40 bis 80, vorzugsweise von 60 bis 70 Gew.-%. Die Menge der Mischung, mit der der Polyurethanschaum behandelt wird, richtet sich im wesentlichen nach den Anforderungen hinsichtlich des Brandverhaltens, die das erfindungsgemäße Laminat später erfüllen muß. Im allgemeinen wird der Polyurethanschaum mit der 0,1- bis 10-fachen Menge der Mischung behandelt, so daß seine Feststoffaufnahme 10 bis 1000 %, vorzugsweise 15 bis 350 %, seines ursprünglichen Gewichts beträgt. Der Polyurethanschaum kann entweder vollständig oder teilweise, z.B. nur in der Oberfläche, imprägniert werden. Das Aufbringen der Mischung kann dementsprechend durch Sprühen, Gießen, Rakeln, Tauchen oder Foulardieren erfolgen. Beispielsweise kann für eine vollständige Imprägnierung des Polyurethanschaums das Laminat mit der Mischung getränkt werden, z.B., indem man es darin eintaucht und anschließend einen Überschuß der Mischung durch Abquetschen entfernt.

Nach der Behandlung wird die im Polyurethanschaum enthaltene Feuchtigkeit durch Trocknen bei erhöhter Temperatur entfernt und das in den Polyurethanschaum eingebrachte Elastomere vernetzt. Bei carboxylgruppenhaltigen Latices, die als Vernetzer Zinkoxid oder Magnesiumoxid enthalten, ergibt sich dabei der Vorteil, daß die Vernetzung des Elastomeren bereits bei den für die Trocknung ausreichenden Temperaturen erfolgt, d.h., bei etwa 100°C oder wenig darüber.

Die erfindungsgemäßen Laminate haben den Vorteil, daß ihre Flammwidrigkeit bequem eingestellt werden kann, je nach den zu erfüllenden Spezifikationen und den gewünschten Anforderungen an das Verhalten im Brandfalle. Zu diesem Zweck kann sowohl die Menge der zur Imprägnierung verwendeten Latexmischung variiert werden als auch deren Zusammensetzung durch entsprechende Auswahl der Elastomeren und der Art und Menge der flammhemmenden Verbindungen und der übrigen Zusätze. Einen besonderen Vorteil bieten mehrschichtige Laminate aus beidseitig mit Polyurethanschaum verbundenen Flächengebilden. Es sind sehr weiche Materialien, die keine Verhärtung aufweisen und daher zur Herstellung von Polstermöbeln mit hohem Liegekomfort geeignet sind. Die erfindungsgemäßen Laminate sind darüberhinaus sehr dimensionsstabil und können auf kontinuierlich laufenden Maschinen problemlos als Endlosware hergestellt und verarbeitet werden.

Sie haben zusätzlich den Vorteil, daß sie auf Textilveredlungsmaschinen wie Streichanlagen, Pflatschvorrichtungen und Imprägnieranlagen leichter zu handhaben
sind als Polyurethan-Weichschaum allein. Durch die Kaschierungsgrundlage, z.B. in Form einer Textilbahn, ist
eine bessere Warenführung möglich. Dies ist besonders
wichtig bei Seitenzugbeanspruchung wie sie z.B. im
Spannrahmen auftritt.

- 9 -

Das folgende Beispiel erläutert die Erfindung.

Beispiel

Durch Flammkaschieren von Polyester- bzw. Polyetherurethanschaum auf ein Baumwollgewebe (150 g/m$^2$) wurde jeweils ein Laminat von 8 mm Dicke hergestellt und mit einer Latexmischung imprägniert, die im wesentlichen folgende Bestandteile enthielt:

104 Gew.-Teile eines 50 gew.-%igen Latex eines Copolymeren aus 96 Gew.-% Chloropren und 4 Gew.-% Methacrylsäure; 116 Gew.-Teile eines Gemisches von Aluminiumhydroxid/Wasser/Pentabromtoluol/Antimontrioxid/Zinkoxid im Gewichtsverhältnis 50:25:6:4:3; 1 Gew.-Teil eines organischen Rotpigments, suspendiert in 2 Gew.-Teilen Wasser.

Die Mischung wurde mit Hilfe eines Pflatschwalzwerkes auf das Laminat aufgetragen, das vollständig von der Mischung durchdrungen wurde. Nach der Trocknung bei 130°C wies das Laminat eine Gewichtszunahme von 300 % auf. Diese Laminate wurden auf ihre Schwerentflammbarkeit getestet gemäß DIN 4102, ASTM D 1692-74 und der Kraftfahrzeugsicherheitsnorm Nr. 302, sowie mit aufgelegten Methamintabletten ("Pill-Test") bzw. aufgelegten brennenden Zigaretten ("California-Test") als Zündquellen. Die Testergebnisse waren positiv und zeigten die gute Branddämmung der erfindungsgemäßen Laminate.

Le A 19 339
MS 109 E 78

Patentansprüche

1) Schwer entflammbare Laminate aus

   a) einem in sich geschlossenen oder perforierten bahnartigen Flächengebilde aus einem organischen oder anorganischen Material und

   b) einem damit verbundenen flammwidrig ausgerüsteten Polyurethanschaum.

2) Schwer entflammbare Laminate gemäß Anspruch 1 aus

   a) einem textilen Flächengebilde in Form eines Gewebes, Gewirkes oder Vliesstoffes aus natürlichen und/oder synthetischen Fasern und

   b) einem durch Behandlung mit einer Mischung aus einem carboxylgruppenhaltigen Elastomerlatex und einer flammhemmenden Verbindung und anschließender Vernetzung des Latex flammwidrig ausgerüsteten Polyurethanschaum.

3) Schwer entflammbare Laminate gemäß Anspruch 1 und 2 aus

   a) einem Baumwollgewebe und

   b) einem Polyether- oder Polyesterurethanschaum, der flammwidrig ausgerüstet ist durch Behandlung mit einer Mischung aus einem carboxylgruppenhaltigen

Le A 19 339
MS 109 E 78

Polychloroprenlatex und Aluminiumhydroxid und anschließender Vernetzung des Latex mit Zinkoxid oder
Magnesiumoxid.

4) Mehrschichtige, schwer entflammbare Laminate gemäß Anspruch 1 bis 3, dadurch gekennzeichnet, daß das bahnartige Flächengebilde beidseitig mit einem flammwidrig
ausgerüsteten Polyurethanschaum beschichtet ist.

5) Verfahren zur Herstellung schwer entflammbarer Laminate gemäß Anspruch 1 bis 4, dadurch gekennzeichnet,
daß das bahnartige Flächengebilde durch Verkleben,
Flammkaschieren oder direktes Beschäumen mit dem
Polyurethanschaum verbunden und dieser dann mit einer
Mischung aus einem vernetzbaren Elastomerlatex und einer flammhemmenden Verbindung behandelt
und der Latex anschließend vernetzt wird.

6) Verfahren zur Herstellung schwerentflammbarer Laminate nach Anspruch 5, dadurch gekennzeichnet, daß der
Polyurethanschaum mit einer Mischung aus einem carboxylgruppen-haltigen Polychloroprenlatex und Aluminiumhydroxid imprägniert und der Latex anschließend mit
Zinkoxid oder Magnesiumoxid vernetzt wird.

7) Verwendung der Laminate gemäß Anspruch 1 bis 4 zur
Herstellung schwerentflammbarer Polstermaterialien
durch teilweise oder vollständige Bedeckung oder
Umhüllung von brennbaren Polstermaterialien mit den
schwerentflammbaren Laminaten.

Le A 19 339
MS 109 E 78

0012906

Nummer der Anmeldung

**EUROPÄISCHER RECHERCHENBERICHT**

EP 79 10 5040

| Kategorie | Kennzeichnung des Dokuments mit Angabe, soweit erforderlich, der maßgeblichen Teile | betrifft Anspruch |
|---|---|---|
| | DE - A - 2 351 602 (W.R. GRACE) <br> * Ansprüche 1-3,7,9,10; Seiten 20-24; Beispiele 1,3,4,11,16, 21-23 * | 1-5,7 |
| | -- | |
| | DE - A - 2 506 274 (GENERAL FOAM PRODUCTS) <br> * Ansprüche 1,3,5; Seiten 3-7, 11 * | 1-3,6 |
| | -- | |
| A | DE - A - 2 336 998 (CHEMSTITCH) | |
| A,D | DE - A - 2 649 222 (DUNLOP) | |
| A,D | GB - A - 977 929 (CIRRUS) | |
| A | DE - A - 1 103 569 (BAYER) | |
| A | US - A - 4 045 609 (J.A.H. HART) | |
| A | DE - A - 1 544 894 (BAYER) | |
| E,A | EP - A - 0 002 458 (BAYER) | |
| | ---- | |

**EINSCHLÄGIGE DOKUMENTE**

**KLASSIFIKATION DER ANMELDUNG (Int.Cl.³)**

B 32 B 27/18
C 08 J 9/42
B 32 B 27/12

**RECHERCHIERTE SACHGEBIETE (Int Cl ³)**

B 32 B
C 08 J 9/42
9/40
9/36

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17-03-1980 | BLASBAND |

EPA form 1503.1 06.78